# EUROPEAN PATENT APPLICATION

(11) **EP 1 463 192 A2**
(43) Date of publication of application: **29.09.2004**
(21) Application number: 04101131.3
(22) Date of filing: 18.03.2004
(51) Int. Cl.: H02M 5/458

(54) **Power Electronic Converter System**

(30) Priority: 20.03.2003 GB 0306401
(71) Applicant: Corac Group plc, Uxbridge, Middlesex UB8 3PQ (GB)
(72) Inventor: Sidey, Roger, TW1 2JU, East Twickenham (GB)
(74) Representative: Messulam, Alec Moses

(57) **Abstract**

A converter system is described having an ac to dc first converter stage connectable to an ac supply and operative to produce a dc output on a dc link and a dc to ac second converter stage directly connected to the dc link and producing an ac output for driving an ac load at a frequency and amplitude that may differ from the frequency and amplitude of the ac supply. In the invention, the first converter stage comprises a bridge of bi-directional electronic switching elements connected between the input ac supply and the dc link and control means for activating the electronic switching elements of the bridge with variable phase relative to the input ac supply in order to vary the dc output on the dc link to the second converter stage.

## Description

### Field of the invention

This invention relates to power electronic converter systems, which are in wide industrial use in the control of electrical machine power. These converter systems employ power semiconductor devices operating in switching, or on-off mode, to convert power from an incoming ac mains supply to a form suitable for driving industrial machines such as synchronous ac or brushless dc motors. In particular, it relates to high power speed controlled drives for applications such as air compressors which operate mostly in steady state but which require continuous (adaptive) and accurate speed control. In these high power applications, efficiency and good supply utilisation are of paramount importance.

### Background of the invention

Generally the mains supply takes the form of a balanced or symmetrical system of three phase sinusoidal voltages at a fixed frequency of 50 or 60 hertz. It is the function of the converter to transform this into a function that will allow the motor to drive its given load at an optimum or specified efficiency. Operation of motors at high power levels necessitates precise control of the applied driving voltages or currents derived from the mains supply. Achieving control within specified limits of the motor speed or position output further requires closed loop or servo control of the frequency of the drive applied to the machine.

The widespread and increasing use of electronic power converters has lead to increasing scrutiny of the utility or load characteristic that these converter-motor systems present to the mains supply. A measure of this is the power factor, which expresses the lag or lead angle between the applied mains voltage and the current drawn at the converter input. At a given net power flow, a lead or lag between voltage and current results in an increased phase current. At unity power factor (zero phase difference) therefore, the converter achieves maximum utilisation of the supply and in so doing minimises the utility (cable and transmission) losses. In addition to power factor, deviation of the converter supply current from a true sinusoidal function affects supply utilisation, and a measure of this is the form factor. If the converter draws current in an intermittent manner from the supply, unwanted harmonic components are introduced and the peak value will be greater than that of a sinusoidal flow of the same steady or mean power. Since dissipation or heating losses are proportional to the square of the instantaneous current, it follows that the best possible utilisation is afforded by a sinusoidal current flow from the supply.

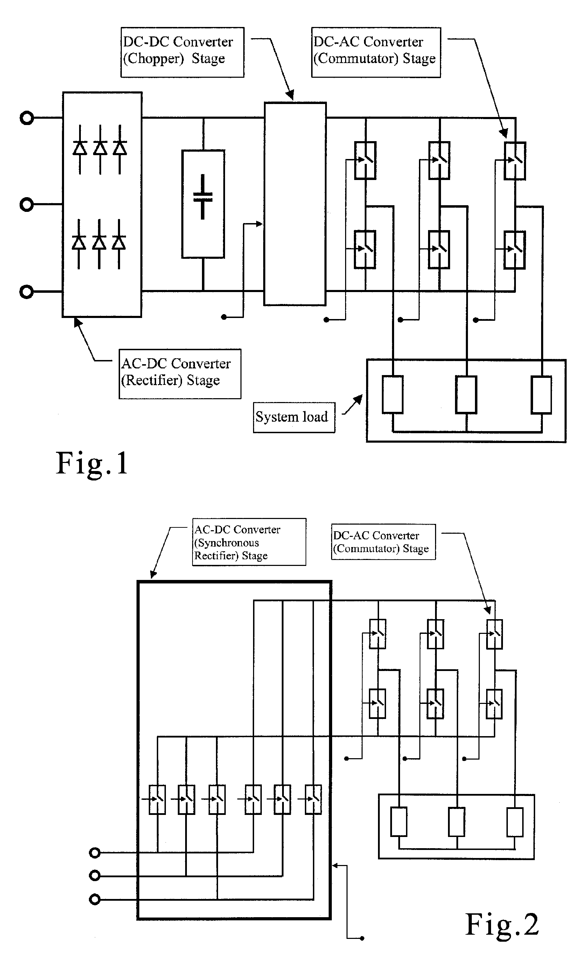

Figure 1 of the accompanying drawings is a block schematic of a conventional variable speed motor drive (commonly referred to as an inverter). Featuring internally a system of three power converter stages, the system converts the incoming three phase mains supply into a variable amplitude, variable frequency three phase output for driving the motor. Power flow through this system follows the form firstly of conversion of the incoming mains to a steady dc supply (referred to as the dc link). This is followed by a dc-to-dc chopper stage, which is used to provide a secondary dc supply controllable in amplitude. Finally, this controlled supply feeds an output or commutation stage. This comprises a system of half bridges, which act to switch the motor phases synchronously and alternately between the variable dc supply potentials. This provides a symmetrical and controlled frequency ac drive to the motor phases.

For many power electronic drive systems, the first ac to dc converter or rectifier stage introduces most of the problems of supply utilisation. In a simple rectifier arrangement, power flows from the mains into the dc link when the potential on a given line is at the appropriate polarity and exceeds that of the link. This necessarily means that each phase is delivering power in bursts and that form factor is therefore impaired. Worse still, however, is the case where basic diode rectifiers, which are forward conducting only, are used. These automatically block (non-conduct) reverse current and hence do not permit bi-directional current flow. In the presence of load inductance, as is always the case in motor drives, there is a component of reverse current flow occurring when drive to a given phase via the commutator switches off. This fly back energy must be prevented from introducing damaging voltage transients and to achieve this, the simple diode rectifier must be followed by a stage of reservoir or storage capacitance. Here the mains rectifier diodes charge the storage capacitance from a given pair of supply lines when their potential difference exceeds that of the dc bus. This considerably worsens supply utilisation in that it can take place only whilst the difference in rate of change in potentials across the diode is also positive. Thus, power flow (and hence current peaking) is concentrated into narrower and hence greater amplitude pulses.

To minimise added harmonic and modulation products of the chopper and commutation frequencies in the final output of the inverter, it is important that the switching frequency of the dc chopper stage be sufficiently high. Both the chopper stage and the commutator stage are switching systems, either conducting from input to output or blocking according to their associated control signals. They thus not only introduce a significant fundamental frequency component (which is the desired result in the case of the commutator stage), but an unwanted component of harmonic power in their resultant outputs. Being cascaded, the transfer functions of the chopper and commutator are multiplied and the harmonic content of the final power output includes the sum and difference of all frequency components introduced by these stages. To minimise the undesirable low frequency content in the motor drive it is thus necessary to switch the chopper stage at a frequency significantly greater than that of the commutation stage.

This high chopper switching rate brings about a correspondingly increased dissipation due to switching losses in the power semiconductors. Furthermore, unlike the front-end rectifier and the commutator stages, power density is high in the chopper switching devices. Thus, operating at high switching frequency and at full power throughput, the dc chopper becomes a critical subsystem of the motor drive; a situation that is exacerbated in high speed drives such as in turbo compressor systems.

### Summary of the invention

With a view to mitigating at least some of the foregoing disadvantages, the present invention provides a converter system having an ac to dc first converter stage connectable to an ac supply and operative to produce a dc output on a dc link and a dc to ac second converter stage directly connected to the dc link and producing an ac output for driving an ac load at a frequency and amplitude that may differ from the frequency and amplitude of the ac supply, wherein the first converter stage comprises a bridge of bi-directional electronic switching elements connected between the input ac supply and the dc link and control means for activating the electronic switching elements of the bridge with variable phase relative to the input ac supply in order to vary the dc output on the dc link to the second converter stage.

In the present invention, the dc chopper stage is eliminated and the motor drive comprises only two power conversion stages. Control of output power is achieved by means of a control algorithm applied to the front-end rectifier i.e. the ac to dc first converter stage. Operating at low frequency, the switching losses in this stage are minimal, and within the matrix of electronic switching elements, power is more distributed than in the dc chopper stage, making for reduced operating stress in the system.

A further benefit of the invention is the ability to balance a system of loads to maximise power factor and hence supply utilisation. Here a number of front-end synchronous rectifier systems can be used to vary the dc link voltages to a system of loads by using a complementary phase-advance and phase-retard control algorithm applied to pairs of rectifier stages, thereby achieving a total load current spread symmetrically about the peaks of the mains supply voltages which maximises the power factor of the total load.

Where applicable this motor drive topology offers the potential benefits over existing designs of reduced cost, greater operating efficiency improved supply utilisation, higher reliability and a more compact assembly.

### Brief description of the drawings

The invention will now be described further, by way of example, with reference to the accompanying drawings, in which:
Figure 1 is a prior art power converter as described above,
Figure 2 is a schematic block diagram of a power converter of the present invention, and
Figures 3 to 8 are graphs showing how varying the switching phase of electronic switches of the first converter stage affects the dc output on the dc link leading to the second converter stage.

### Detailed description of the preferred embodiment

As will be clear from the foregoing introduction, the present invention is concerned primarily with the front-end converter stage in a motor drive system, namely the ac to dc converter stage. The function of this stage is to receive the incoming ac supply, which is generally in the form of a three phase voltage supply, and convert it to a dc supply, or as it is commonly known, a dc link. As mentioned previously, this is conventionally achieved using a system of passive rectifier diodes or bi-directional power switches connected in a bridge arrangement. These couple successive pairs of the incoming mains phases to the dc link at the appropriate point in their voltage cycles.

In the present invention, a switched or synchronous rectifier system employing bi-directional switching elements, also referred to herein as switches for brevity, is used in this first power converter stage. This is illustrated in Figure 2 for a 3-phase system where it can be seen the each line of the dc link is coupled to each of the incoming power lines via a bi-directional power switch. Instead of synchronising the control of switching to a fixed reference point on the supply cycle however, the switching sequence according to this invention is allowed to translate or to be varied in phase relative to the supply.

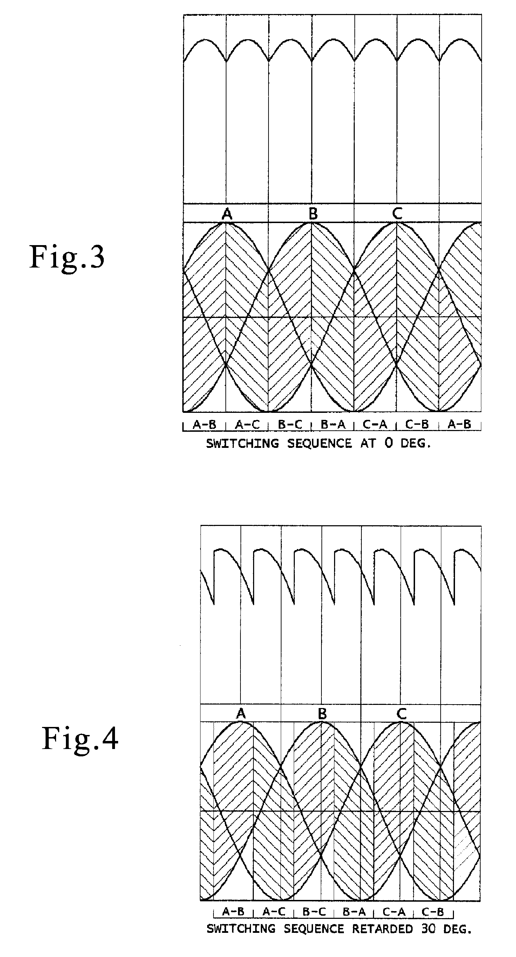

In this way, as shown in Figures 3 to 8, the output of the first converter stage comprises phase sequenced slices or samples of the supply function. By varying the relative phase of the control function applied to the power switches, in either advance or retard, the mean dc output or dc link voltage is controlled directly by the rectifier stage. Over a full cycle of phase offset, it can be set anywhere between plus and minus the maximum value attained by direct rectification.

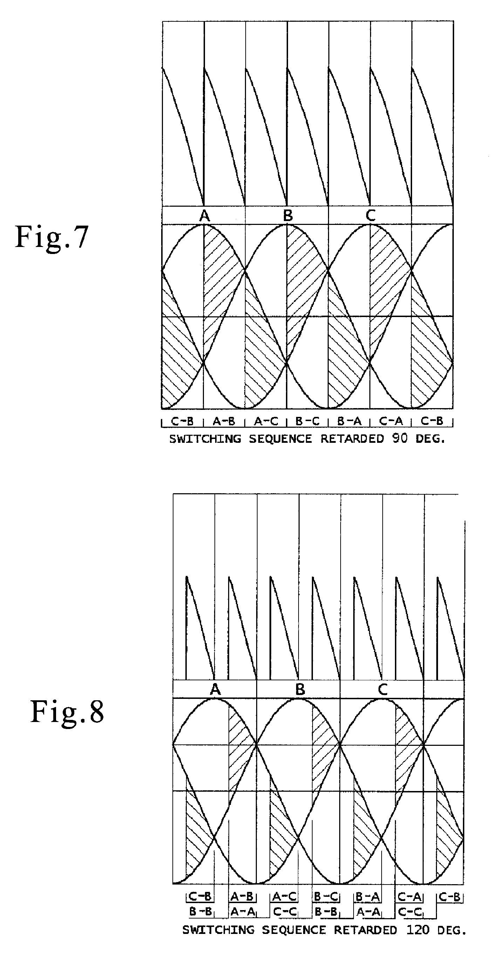

The following half-bridge commutator stage, however, will not tolerate negative supply potentials and this is avoided in the preferred embodiment of the invention by modifying the control algorithm at the point of onset of reversing output potential. This is illustrated in Figure 8 where, at a phase offset greater than 90° from the given reference, a negative component appears in the output function. This is eliminated by the modified control algorithm of Figure 8 where, in a succession of additional switching intervals, the dc bus is isolated from the supply and shunted by the power switches. By this means, the amplitude of the drive function to the motor can be controlled over the full range from maximum output to zero.

It should be noted that while, in principal, the range of power control afforded by the synchronous rectifier system is large, it would in practice operate for most of the time over a restricted range around maximum output. The harmonic content of the waveforms of Figures 6 to 8 (where the output voltages are considerably lower than the maximum value) is very large and would permit operation only at low power levels. It would however allow for controlled run-up and run-down to and from a relatively narrow band of operating speed. An instance of this in an industrial air compressor application is discussed below.

It will be apparent that in utilising bi-directional switching, the synchronous rectifier system always presents a low impedance source to the load and thus does not require storage or reservoir capacitors on its output. Thus, while it draws a pulse or discontinuous current drain from the mains supply phases, it does not introduce the further peaking in current that occurs with storage capacitors. In varying the phase of the conducting periods relative to the supply however, it will be apparent that the system does introduce phase current lag or lead and thus degradation in the load power factor of the system. In this invention, however, this effect is overcome by exploiting the property of the synchronous rectifier to provide power control both by advancing or retarding the relative switching phase.

Thus, when using the invention, load power factor can be maximised by splitting the load into parts and driving each from an individual or dedicated rectifier. For a pair of rectifiers and loads, power flow would be controlling by advancing the relative switching phase in one of the systems and retarding it in the other. This technique can be applied using any number of loads, where the distributed power can be arranged for each individual load to be under phase advance or retard control according to an optimisation or power control algorithm.

An example of this would be a high-pressure turbo compressor system where two stages are cascaded to provide a compound or product pressure ratio from input to output. In this system, the power to each stage would be nearly equal. The control system would be required to adjust the speeds of each stage to set their operating points relative to each other and to respond to external stimuli such as inlet air temperature or changes in delivery pressure. Here, for example, the speed of both stages may be reduced to compensate for a temperature reduction and corresponding increase in density of the system inlet air. This would require a reduction in the voltage applied to the output stages of the motor drive inverters, and thus an increase in the phase lag or lead in the synchronous rectifier stages. By using a complementary phase advance and retard technique, the pulsation of load current on each phase of the supply due to the individual rectifier stages is balanced about the peak of the supply function. The overall system power factor is thus maximised.

In order to further minimise the effects of pulsation in the output of the synchronous rectifier stage, it is further proposed that the commutation stage or stages following the synchronous rectifier stage be controlled such that the period corresponding to an integer number of motor commutation cycles n, is arranged to be equal to the period corresponding to an integer number of switching sequences m of the converter system. This synchronisation eliminates low frequency modulation or so called beat frequency components in the response of the load, which might otherwise result in the production of undesirable noise or vibration by the motor.

Figures 3 to 8 illustrate the operation of the synchronous rectifier system showing the output waveforms to the dc link corresponding to a number of phase displacements of the switching sequence. As with a conventional matrix rectifier (either employing bi-directional switches or forward conducting diodes) the rectifier output is a repetitive function comprising six switching or conducting states per cycle of the incoming mains supply. The 3-phase mains voltages A, B and C are sampled in pairs as shown in the bottom of each figure, the sampling intervals being shown alternately hatched on the waveforms. Shown directly above in each figure is the potential difference function applied to the dc link.

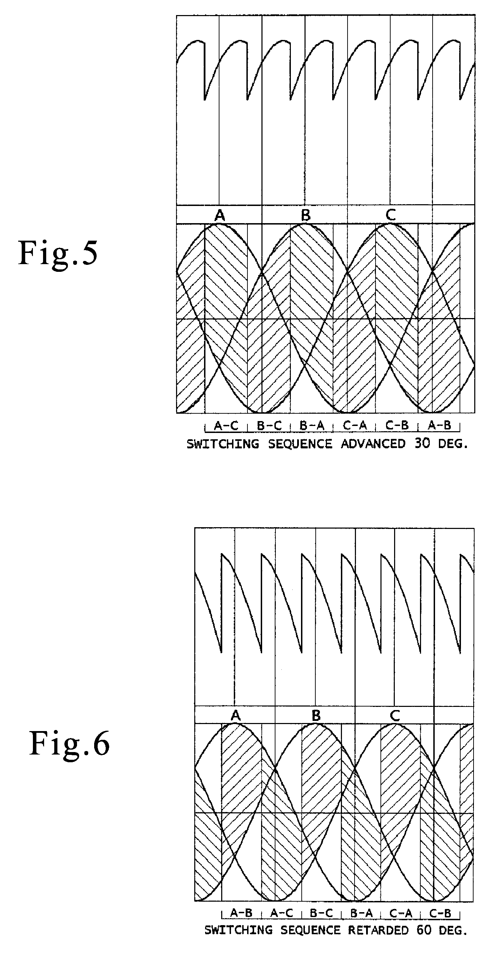

Figure 3 shows the maximum output condition where the transitions between conducting paths within the system occur at the instant of equal potential for all combinations of waveform pairs (6 in all for a 3-phase system). Figures 4 and 5 show the effects of a shift of 30 degrees in lag and leading phase. The mean dc output is the same for these functions, but the waveforms are no longer symmetrical about the peak value of the supply functions as they are in Figure 3. Combining the load currents on the supply from pairs of synchronous rectifiers controlled in complementary or leading and lagging fashion and driving similar loads however, restores the symmetry and hence the load power factor.

## Claims

1. A converter system having an ac to dc first converter stage connectable to an ac supply and operative to produce a dc output on a dc link and a dc to ac second converter stage directly connected to the dc link and producing an ac output for driving an ac load at a frequency and amplitude that may differ from the frequency and amplitude of the ac supply, wherein the first converter stage comprises a bridge of bi-directional electronic switching elements connected between the input ac supply and the dc link and control means for activating the electronic switching elements of the bridge with variable phase relative to the input ac supply in order to vary the dc output on the dc link to the second converter stage.

2. A converter system as claimed in claim 1, wherein the electronic switching elements are controlled in such a manner that the polarity of dc output on the dc link is never reversed.

3. A converter system as claimed in claim 1 or 2, coupled to a motor commutator stage wherein the electronic switching elements of the commutator stage are controlled in such a manner that the period corresponding to an integer number of commutation cycles n, is arranged to be equal to the period corresponding to an integer number of switching sequences m, of the converter system, thereby eliminating low frequency beating components in the response of the load.

4. A pair of converter systems each as claimed in any preceding claim, fed from a common power supply source and arranged to drive a system of independent and substantially balanced loads, wherein the electronic switching elements of the converters are controlled in such a manner that the switching sequences relative to the supply are advanced in phase in one converter and retarded by a similar amount in the other converter, thereby achieving a close to unity power factor for the overall load presented to the supply.
